(19)

Europäisches Patentamt

European Patent Office

Office européen des brevets

(11) **EP 4 518 337 A1**

(12) **EUROPEAN PATENT APPLICATION**
published in accordance with Art. 153(4) EPC

(43) Date of publication:
**05.03.2025  Bulletin 2025/10**

(21) Application number: **22940350.6**

(22) Date of filing: **17.05.2022**

(51) International Patent Classification (IPC):
$H04N\ 23/60$ *(2023.01)*      $H04N\ 23/00$ *(2023.01)*
$H04N\ 5/77$ *(2006.01)*       $G03B\ 13/20$ *(2021.01)*
$G03B\ 13/32$ *(2021.01)*      $G03B\ 3/00$ *(2021.01)*
$G06V\ 20/60$ *(2022.01)*      $G06V\ 10/82$ *(2022.01)*

(52) Cooperative Patent Classification (CPC):
H04N 23/67; G03B 3/00; G03B 13/20; G03B 13/32;
G06T 7/50; G06T 7/60; G06V 10/776; G06V 10/82;
G06V 20/60; G06V 20/625; G06V 40/161;
H04N 5/77; H04N 23/00; H04N 23/60; H04N 23/61;
(Cont.)

(86) International application number:
**PCT/KR2022/007016**

(87) International publication number:
**WO 2023/210856 (02.11.2023 Gazette 2023/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **29.04.2022  KR 20220053253**

(71) Applicant: **Hanwha Vision Co., Ltd.
Seongnam-si, Gyeonggi-do 13488 (KR)**

(72) Inventors:
• **KIM, Dae Bong**
  **Seongnam-si Gyeonggi-do 13488 (KR)**
• **PARK, Dong Jin**
  **Seongnam-si Gyeonggi-do 13488 (KR)**
• **PARK, Ki Bum**
  **Seongnam-si Gyeonggi-do 13488 (KR)**
• **KWON, Young Sang**
  **Seongnam-si Gyeonggi-do 13488 (KR)**

(74) Representative: **Gulde & Partner
Patent- und Rechtsanwaltskanzlei mbB
Berliner Freiheit 2
10785 Berlin (DE)**

(54) **AUTOFOCUS ADJUSTMENT METHOD AND CAMERA DEVICE USING SAME**

(57)   A camera device having a processor and a memory storing instructions executable by the processor includes, an image sensor capturing an image of a subject, an object identifier identifying an object included in the captured image, a distance calculator calculating a distance between the camera device and the identified object based on an occupancy percentage of the identified object in the captured image, and a controller searching for an optimal focus location where a reference value is the largest while moving a lens in a focus range including at least a focus location of the lens corresponding to the calculated distance.

FIG. 2

CAMERA DEVICE (100)

SUBJECT → LENS (105) → IMAGE SENSOR (110)

LENS DRIVER (120)    IMAGE PROCESSOR (115)

OBJECT IDENTIFIER (130)    CONTROLLER (150)    DISTANCE CALCULATOR (160)

AI DEVICE (20)    STORAGE (170)

**(Cont. next page)**

(52) Cooperative Patent Classification (CPC): (Cont.)
     **H04N 23/611**

## Description

## [Technical Field]

The present disclosure relates to autofocus adjustment technology, and more particularly, to an autofocus adjustment method and device capable of performing rapid autofocus adjustment by estimating a distance between a lens and a subject.

## [Background Art]

Electronic devices such as digital cameras and digital video cameras are mounted with image capturing devices such as charge coupled device (CCD) or complementary metal oxide semiconductor (CMOS) image sensors. The image capturing device has an autofocus (AF) function that automatically adjusts a focus. In autofocus, the focus is appropriately adjusted by driving a lens, and it is possible to acquire such a focused image.

However, in autofocus according to the related art, the focus cannot be automatically adjusted to a part desired by a user depending on a subject, which is a target. In this case, the user has got to perform a manipulation for focus adjustment when an image is captured, and thus, the user may not capture an image when devoting himself/herself to the image capturing itself.

Furthermore, it is necessary to adjust a distance between the lens and an image sensor by changing a location of the lens and perform focusing of an image of the subject in order to use such an autofocus function, and thus, a time delay for finding an optimal focus location occurs.

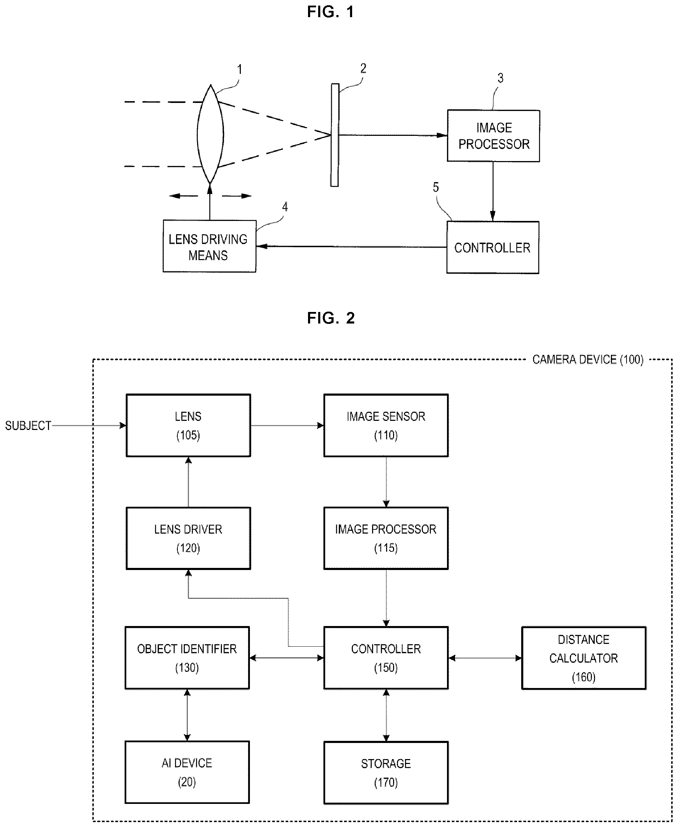

As illustrated in FIG. 1, a camera according to the related art includes a lens 1, an image sensor 2 capturing an image of a subject transmitted through the lens, an image processor 3 processing information on the image captured by the image sensor to generate sharpness indicating a degree of focusing of the image, a controller 5 calculating an appropriate location of the lens 1 according to the sharpness of the image processor 3, and a lens driving means 4 for moving the lens 1 to the location calculated by the controller 5.

Specifically, when an autofocus command is input by a user's camera manipulation or the like, the controller 5 initializes a location of the lens 1 by moving the lens 1 to an initial location, which is either the farthest distance location, which is a location closest to the image sensor (a location farthest from the subject) or the nearest distance location, which is a location farthest from the image sensor (a location closest to the subject). Thereafter, the controller 5 calculates sharpness (e.g., contrast data) at respective locations of the lens 1 while moving the lens 1 at regular intervals, and determines a location of the lens 1 having maximum sharpness of the sharpness values.

Thereafter, the controller 5 moves the lens 1 again to the vicinity of a point having the maximum sharpness, calculates sharpness at respective locations of the lens 1 while short moving the lens 1 in a predetermined range of the vicinity of the point having the maximum sharpness, and finally determines a point having maximum sharpness of the sharpness values.

Finally, the controller 5 moves the lens 1 to the point having the maximum sharpness and then completes autofocusing.

As described above, the autofocus function according to the related art should calculate sharpness for all regions where the location of the lens is changed, and thus, a time required for autofocusing increases, and when rapid autofocusing is performed in order to decrease the time required for autofocusing, accuracy of the autofocusing decreases.

## [Disclosure]

## [Technical Problem]

Aspects of the present disclosure improve contrast-based autofocus performance through artificial intelligence deep learning-based thing detection technology.

Aspects of the present disclosure also improve an autofocus speed by estimating a distance between a subject and a lens using detected object information and lens/sensor information.

Aspects of the present disclosure also further improve autofocus performance using object detection information during an autofocusing operation.

However, aspects of the present invention are not restricted to those set forth herein. The above and other aspects will become more apparent to one of ordinary skill in the art to which the disclosure pertains by referencing the detailed description of the present invention given below.

## [Technical Solution]

According to an aspect of an exemplary embodiment, there is provided a camera device comprising a processor and a memory storing instructions executable by the processor, comprising: an image sensor capturing an image of a subject; an object identifier identifying an object included in the captured image; a distance calculator calculating a distance between the camera device and the identified object based on an occupancy percentage of the identified object in the captured image; and a controller searching for an optimal focus location where a reference value is the largest while moving a lens in a focus range including at least a focus location of the lens corresponding to the calculated distance.

The reference value is contrast data or edge data.

The camera device further includes a storage for storing specification information of the camera device, wherein the distance calculator acquires an angle of view in a vertical direction included in the specification information, and calculates the distance between the camera device and the identified object using the acquired angle of view in the vertical direction, a ratio of a size of the object, and a physical size of the object, and the ratio of the size of the object is a ratio of a size of the entirety or a part of the object in the vertical direction to a size of the captured image in the vertical direction.

The object is a person, and the part of the object is a face.

The object is a vehicle, and the part of the object is a license plate of the vehicle.

The controller reads locus data included in the specification information stored in the storage and determines the focus range from the calculated distance with reference to the locus data, and the locus data is expressed as a focus location according to a distance to the subject at a specific zoom magnification.

The object is an object selected among a plurality of objects included in the captured image.

The selected object is an object closest to a center of the captured image among the plurality of objects.

The plurality of objects include different types of two or more objects, and the selected object is an object whose size of the entirety or a part is standardized among the two or more objects.

The identification of the object is performed by a deep learning-based thing detection algorithm, and accuracy for the identification of the object is obtained as a result of the identification, and the selected object is an object having higher accuracy among the plurality of objects.

The controller sets a window in the captured image and searches for the optimal focus location in the set window, and the set window is set around the selected object.

The identification of the object is performed by a deep learning-based thing detection algorithm, and accuracy for the identification of the object is obtained as a result of the identification, and as the accuracy becomes higher, the focus range is set to be narrower, and as the accuracy becomes lower, the focus range is set to be wider.

The controller sets a window in the captured image and searches for the optimal focus location in the set window, and when there is movement of the identified object, the controller sets the window in consideration of the movement of the object.

The controller changes a size of the window when the movement of the object is movement of the object that becomes close to or far from the image sensor.

The controller moves and set the window to a predicted location according to the movement when the movement of the object is movement of the object to another location in the captured image.

According to another aspect of an exemplary embodiment, there is provided an autofocus adjustment method performed by instructions under the control of a processor in a camera device comprising the processor and a memory storing the instructions executable by the processor, the autofocus adjustment method including: capturing an image of a subject; identifying an object included in the captured image; calculating a distance between the camera device and the identified object based on an occupancy percentage of the identified object in the captured image; and moving a lens in a focus range including at least a focus location of the lens corresponding to the calculated distance; and searching for an optimal focus location where a reference value is the largest while moving the lens.

The autofocus adjustment method further includes, acquiring an angle of view in a vertical direction included in specification information of the camera device; and calculating the distance between the camera device and the identified object using the acquired angle of view in the vertical direction, a ratio of a size of the object, and a physical size of the object, wherein the ratio of the size of the object is a ratio of a size of the entirety or a part of the object in the vertical direction to a size of the captured image in the vertical direction.

The object is an object selected among a plurality of objects included in the captured image, and the selected object is an object closest to a center of the captured image among the plurality of objects.

The object is an object selected among a plurality of objects included in the captured image, the plurality of objects include different types of two or more objects, and the selected object is an object whose size of the entirety or a part is standardized among the two or more objects.

The identification of the object is performed by a deep learning-based thing detection algorithm, and accuracy for the identification of the object is obtained as a result of the identification, and an object having higher accuracy among a plurality of objects included in the captured image is selected as the identified object.

**[Advantageous Effects]**

According to the present disclosure, it is possible to decrease performance deterioration due to inaccuracy of focus while decreasing a time required for autofocus by narrowing an autofocus search range in contrast autofocus technology.

In addition, according to the present disclosure, it is possible to improve convenience of a user by providing a graphic user interface (GUI) so that the user may select a search range in a setting of a camera.

Further, rapider and more accurate autofocusing becomes possible by adding a distance measuring device such as a laser to autofocus improvement technology according to the present disclosure.

**[Description of Drawings]**

FIG. 1 is a block diagram of a camera having an autofocus function according to the related art;

FIG. 2 is a block diagram illustrating a configuration of a camera device according to an embodiment of the present disclosure;

FIGS. 3A to 3C are diagrams illustrating examples of calculating distances to specific objects using only images captured by the camera device;

FIG. 4 is a diagram illustrating a process of finding an optimal focus location where a reference value is the largest;

FIG. 5 is graphs of locus data illustrating a change in focus location at a specific magnification;

FIG. 6 is a diagram illustrating an example of calculating a distance on the basis of an object close to the center of an image among a plurality of objects;

FIGS. 7A and 7B are diagrams illustrating a method of setting an AF window used when a controller determines a location of a lens having maximum sharpness from contrast data; and

FIGS. 8A is a block diagram of an artificial intelligence (AI) device in accordance with an exemplary embodiment of the present disclosure, and FIG. 8B is an example of a deep neural network (DNN) model to which the present disclosure may be applied.

FIG. 9 is a block diagram illustrating the hardware configuration of a computing device that implements a camera device illustrated in FIG. 2.

FIG. 10 is a schematic flowchart illustrating an autofocus adjustment method in the camera device according to an embodiment of the present disclosure.

**[Mode for Invention]**

Advantages and features of the disclosure and methods to achieve them will become apparent from the descriptions of exemplary embodiments herein below with reference to the accompanying drawings. However, the inventive concept is not limited to exemplary embodiments disclosed herein but may be implemented in various ways. The exemplary embodiments are provided for making the disclosure of the inventive concept thorough and for fully conveying the scope of the inventive concept to those skilled in the art. It is to be noted that the scope of the disclosure is defined only by the claims. Like reference numerals denote like elements throughout the descriptions.

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and/or the present application, and will not be interpreted in an idealized or overly formal sense unless expressly so defined herein.

Terms used herein are for illustrating the embodiments rather than limiting the present disclosure. As used herein, the singular forms are intended to include plural forms as well, unless the context clearly indicates otherwise. Throughout this specification, the word "comprise" and variations such as "comprises" or "comprising," will be understood to imply the inclusion of stated elements but not the exclusion of any other elements.

Hereinafter, exemplary embodiments of the present disclosure will be described in detail with reference to the accompanying drawings.

FIG. 2 is a block diagram illustrating a configuration of a camera device 100 according to an embodiment of the present disclosure. The camera device 100 may be configured to include a lens 105, an image sensor 110, an image processor 115, a lens driver 120, an object identifier 130, an artificial intelligence (AI) device 20, a controller 150, a distance calculator 160, and a storage 170.

The controller 150 may serve as a controller controlling operations of other components of the camera device 100, and may generally be implemented as a central processing unit (CPU), a microprocessor, or the like. In addition, the storage 170 is a storage medium storing a result performed by the controller 150 or data necessary for an operation of the controller 150, and may be implemented as a volatile memory or a non-volatile memory.

The lens 105 may be opened or closed by a shutter (not illustrated), and introduces light reflected from a subject in a state where the shutter is opened. The lens 105 may move (forward or backward) in a predetermined range by the lens driver 120 for focus adjustment. The lens driver 120 may generally be implemented as a rotary motor, a linear motor, or various other types of actuators.

The image sensor 110 captures an image in a manner of capturing light input to the lens 105 in the state where the shutter is opened and outputting the captured light as an electrical signal. Such an image may be displayed as an analog signal or a digital signal, but recently, it is general that such an image is displayed as a digital signal. The digital signal is pre-processed by the image processor or an image signal processor (ISP) and then provided to the controller 150, and is temporarily or permanently stored in the storage 170.

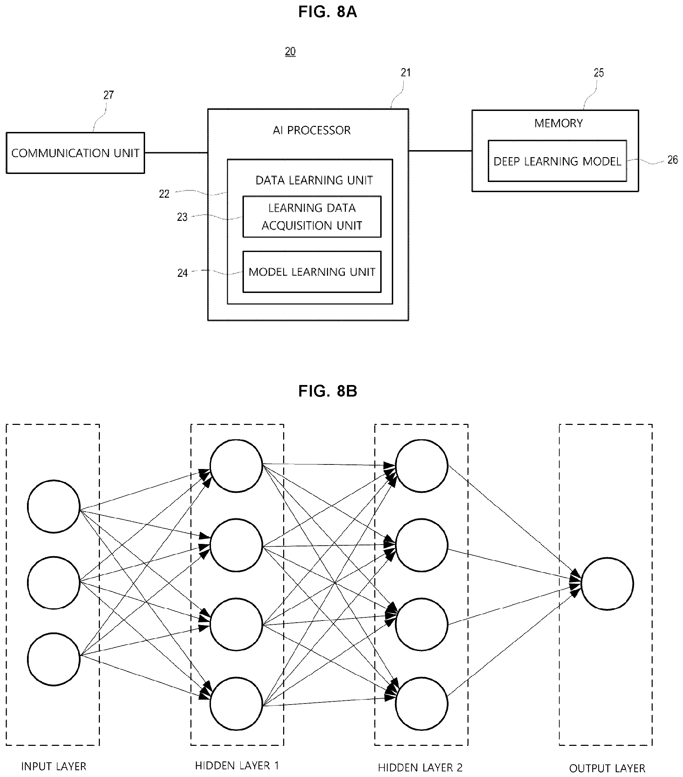

The object identifier 130 identifies an object included in the captured image. The object refers to a target that may be distinguished from a background and has independent movement, such as a person or a thing included in an image. Such identification of the object may be performed through a deep learning algorithm by the AI device 20. The AI device 20 will be described in more detail later with reference to FIGS. 8A and 8B. The object identified by the object identifier 130 may generally be defined by an object ID, a type of object, an object probability, an object size, and the like. The object ID is an arbitrary identifier indicating whether or not the object is identical, and the type of object indicates a class that may be distinguished by a person, such as a person, an animal, and a vehicle. In addition, the object probability is a numerical value indicating accuracy with which the object would have been correctly identified. For example, when a type of specific object is a person and the object probability is 80%, it means that a probability that the object will be the person is 80%.

The distance calculator 160 calculates a distance between the camera device and the identified object based on an occupancy percentage of the identified object in the captured image. The distance calculator 160 may also directly measure a distance to the identified object like a laser-based distance measuring device. Hereinafter, the present disclosure will be described on the assumption that the distance is calculated only by analysis of the image such as the occupancy percentage of the object in the image.

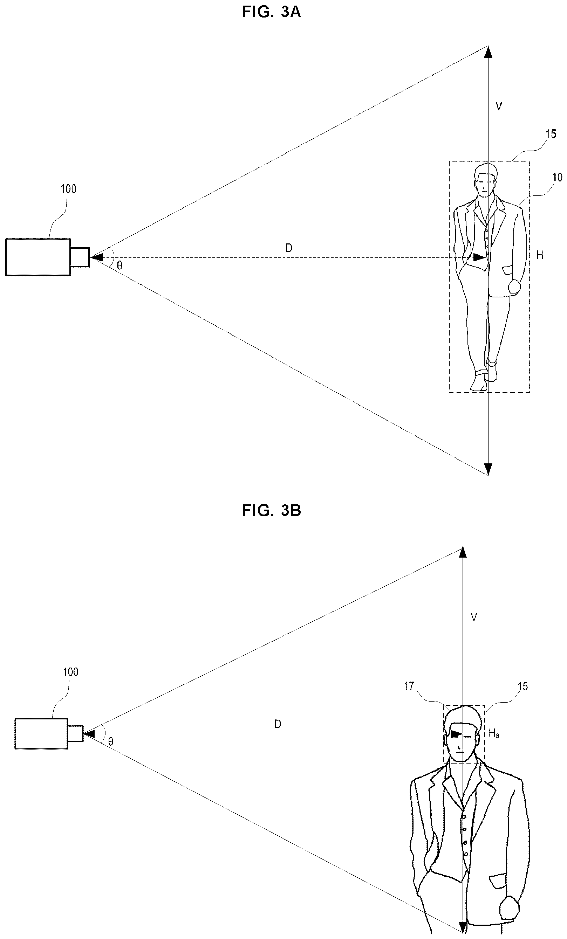

FIGS. 3A to 3C are diagrams illustrating examples of calculating distances to specific objects using only images captured by the camera device 100. Among them,

FIG. 3A illustrates an example of calculating a distance between the camera device 100 and a person on the basis of an entire size of an object, for example, the person, included in the image.

In FIG. 3A, a value to be calculated is a distance D between the camera device 100 and the person 10. Here, an angle of view of the camera device 100 in a vertical direction is expressed as $\theta$, and a size in the vertical direction that may be image-captured by the camera device 100 according to the angle of view $\theta$ is expressed as V. In addition, the size of the object such as the person may be displayed in the form of a box 15 by the object identifier 130 described above, and the size of the object in the vertical direction may be defined as H.

The angle of view $\theta$ of the camera device 100 may be obtained from specification information of the camera device 100, and the specification information may be stored in advance in the storage 170.

In this case, a ratio between the size V in the vertical direction that may be image-captured and the size H of the object in the vertical direction (height of the person when the object is the person) may be considered to be the same as a ratio of a size of the object in the image to a size, in the vertical direction, of the image captured by the image sensor 110. Accordingly, when the size of the image in the vertical direction is assumed to be 100 and the ratio of the size of the object to the size of the image in the vertical direction is P(%), a relationship as represented in Equation 1 is established.

[Equation 1]

$$\frac{H}{V} = \frac{P}{100}$$

In addition, Equation 2 is satisfied between the distance D and the size V in the vertical direction that may be image-captured. Here, $\theta$ refers to the angle of view of the camera device 100 in the vertical direction, more precisely, an angle of view in the vertical direction at a specific magnification.

[Equation 2]

$$V = 2 \times D \times \tan\left(\frac{\theta}{2}\right)$$

Accordingly, when Equation 1 and Equation 2 are combined with each other, the distance D to be finally obtained is calculated as represented in Equation 3.

[Equation 3]

$$D = \frac{50 \times H}{P \times \tan\left(\frac{\theta}{2}\right)}$$

In Equation 3, the angle of view $\theta$ may be known from specifications of the camera device 100, and the ratio P of the size of the object may be simply known by confirming the image captured by the image sensor 110. For example, when the number of vertical pixels in the captured image is 1080 and the number of vertical pixels occupied by a specific object in the captured image is 216, the ratio P of the size of the object will be 20.

In addition, assuming that the angle of view $\theta$ is 30°, H corresponding to the height of the person may be considered to be approximately 1 m to 2 m, and thus, a minimum value of D will be 9.25m and a maximum value of D will be 18.5m.

Since the distance between the camera device and the object is reduced to a predetermined range rather than an entire distance range (0 to infinity) through simple calculation as described above, when an optimal focus location is searched using the predetermined range as a reference point, a time of an autofocusing operation will obviously decrease.

In addition, a more accurate calculation may be made by additionally reflecting a location of the object, lens distortion information, and the like, and in the case of a zoom camera whose angle of view changes, the distance may be rapidly calculated by storing distance values for each object size in a table according to each magnification. However, such distance calculation is enough to narrow a focus search range during the autofocusing operation, and may thus be sufficiently utilized even though accuracy is not perfect.

In FIG. 3A, the distance D between the camera device 100 and the object 10 has been calculated on the basis of the entire size of the object such as the height of the person. However, as described above, the height of the person may have considerably various ranges and may change depending on a posture even in the case of the same person. Therefore, in FIG. 3B, the distance D may be calculated by applying Equation 3 described above on the basis of a size $H_a$ of a part of the object, for example, a face 17 of the person, in the vertical direction. Particularly, in the face 17 of the person, feature points of the face such as eyes, a nose, and a mouth are clear and a deviation between sizes of the feature points is small, and thus, a more accurate result may be obtained.

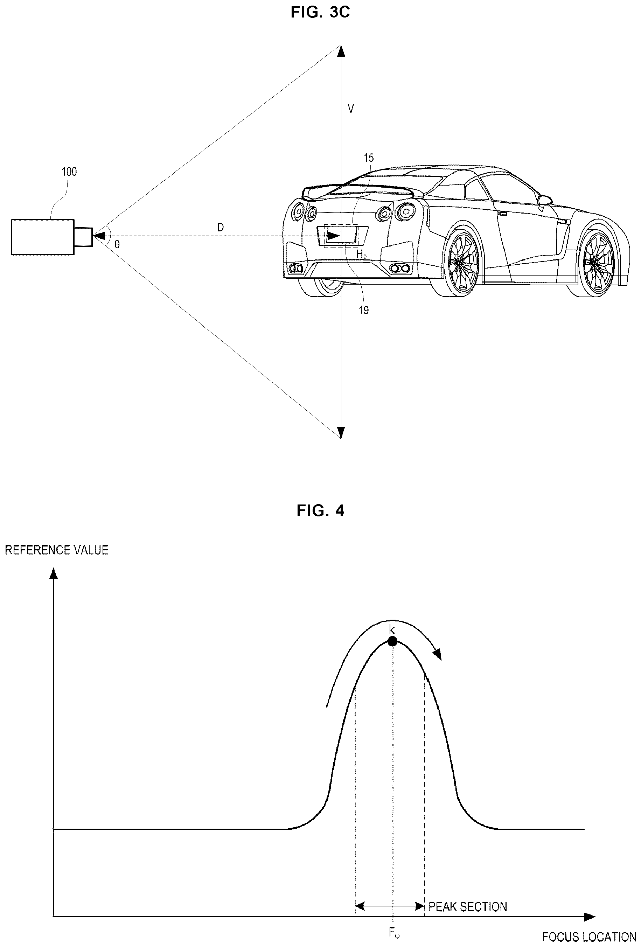

Meanwhile, when a part of an object having a more standardized size than the face of the person is used, accuracy of the calculation of the distance D may be further increased. As illustrated in FIG. 3C, a license plate 19 of a vehicle has a standardized size in horizontal and vertical directions according to national regulations. Accordingly, the distance D may be calculated by applying Equation 3 described above on the basis of a size $H_b$ of the license plate 19 of the vehicle in the vertical direction. In this case, accuracy of the calculated distance D will be higher than that in other embodiments.

Referring again to FIG. 2, the controller 150 drives the lens driver 120 so as to move the lens in a focus range including at least a focus location of the lens 105 corresponding to the distance D calculated by the distance calculator 160. In addition, the controller 150 searches for an optimal focus location where a reference value is largest in the focus range. FIG. 4 is a diagram illustrating a process of finding the optimal focus location $F_o$ where the reference value is the largest as described above. The controller 150 continuously checks a change in the reference value while the focus location of the lens 105 moves. The controller first finds a peak section including a point where a peak value occurs (peak point) while moving in a relatively large step. Once the peak section is found, the controller may find a final peak point k while finely moving in the peak section, and a focus location at such a peak point k is set to the optimal focus location $F_o$.

Finally, the controller 150 drives the lens driver 120 to move the lens 105 to the optimal focus location $F_o$, such that the autofocusing operation is completed.

Contrast data or edge data may generally be used as the reference value. Such contrast data may be defined as the sum of absolute differences (SAD) between pixels in a region of interest and surrounding pixels, and the larger the SAD, the more the edge data or the details of the image. Generally, the more accurate the focus, the higher the value of the edge data.

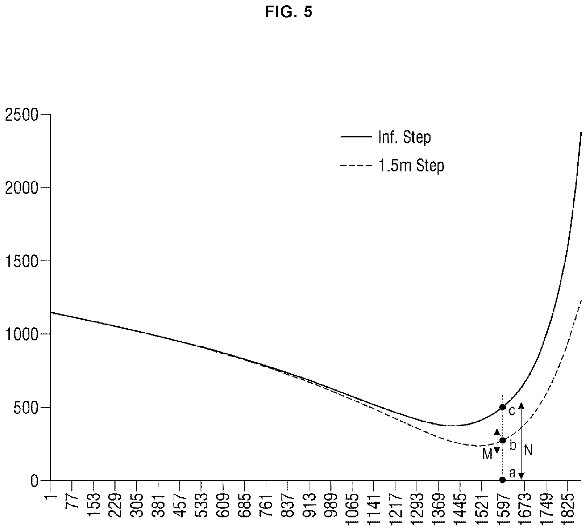

As described above, the calculated distance D has a corresponding relationship with the focus location of the lens 105. FIG. 5 is graphs of locus data illustrating a change in focus location at a specific magnification. Such locus data may be stored in advance in the storage 170 as specification information of the camera device 100. Here, a horizontal axis is a zoom magnification of the camera device 100, and a vertical axis is a focus location of the camera device 100.

FIG. 5 exemplarily illustrates only locus data (solid line) at an infinite Inf distance and locus data (dotted line) at a distance of 1.5 m. For example, at a location where the zoom magnification is 1597, the focus location at the distance of 1.5 m is approximately 300, and the focus location at the infinite distance is approximately 500. In the case of a general autofocusing function, the optimal focus location should be searched from a very close distance to the infinite distance, that is, in a range N of 0 to 500. On the other hand, as suggested in the present disclosure, for example, when the calculated distance D is 1.5 m, the optimal focus location needs to be searched only in a reduced margin range, that is, a focus range M, including at least the calculated focus location b, and thus, a time required for the autofocusing operation decreases, such that rapid autofocusing becomes possible.

Hereinabove, a process of calculating the distance D on the basis of the object in the image and finding the optimal focus location using the calculated distance D has been described. However, in many cases, there are a plurality of objects rather than only one object in an image. Accordingly, it is preferable that an object that is a basis for calculating the distance D in the captured image is some objects or one object selected among the plurality of objects.

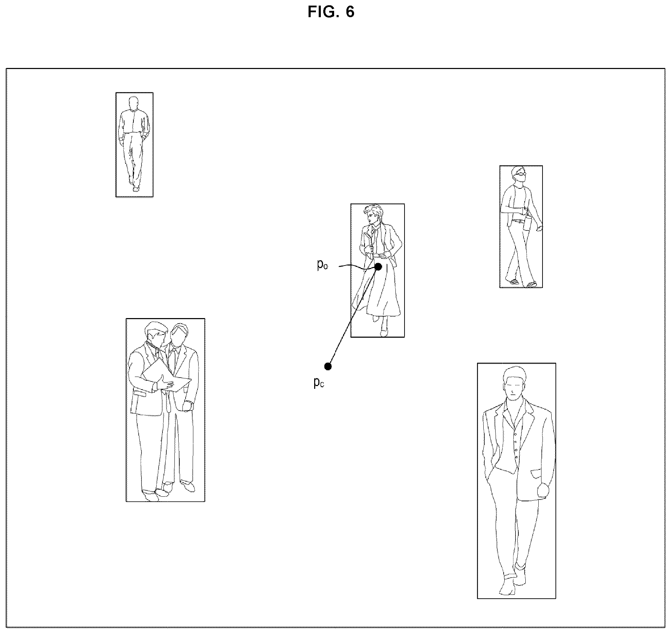

As an embodiment of selecting one of the plurality of objects, the selected object may be an object closest to the center of the captured image among the plurality of objects. FIG. 6 is a diagram illustrating an example of calculating a distance D on the basis of an object close to the center of an image among a plurality of objects.

When a camera simply performs autofocus on the basis of the center of the image, in the case where there are no objects at the center $p_c$ of the image, things are out of focus through the autofocus, such that a blurry image may be obtained. When the camera device 100 includes the object identifier 130 as illustrated in FIG. 2, it is preferable to calculate the distance D on the basis of an object $p_o$ selected among the plurality of objects. However, it is necessary to determine a basis for selecting an object among the plurality of objects in the image. Generally, in most cases, a user places a target for which he/she wants to capture an image at the center of the image. Therefore, in an embodiment, the object $p_o$ closest to the center $p_c$ of the image among the plurality of objects is selected.

However, all of the plurality of objects are persons in FIG. 6, but persons and other things may be mixed in the image. That is, when the plurality of objects in the image include different types of two or more objects, the basis for selecting the object may be differently determined. For example, in an image in which the object having the part (e.g., the license plate) having the standardized size as illustrated in FIG. 3C and the other object are mixed, the distance D may be calculated on the basis of the object having the part of the standardized size rather than whether or the object is close to the center of the image.

As another embodiment, it is also possible to calculate the distance D on the basis of an object having a high object probability.

As described above, the object identifier 130 may identify the object using a deep learning-based thing detection algorithm, and as a result, obtain accuracy of object identification, that is, an object probability. In this case, the distance D may be calculated on the basis of object having the highest object probability or accuracy among the plurality of objects in the image. This is to prevent the distance D from being completely incorrectly calculated to hinder a rapid autofocusing operation when the type of object is misjudged.

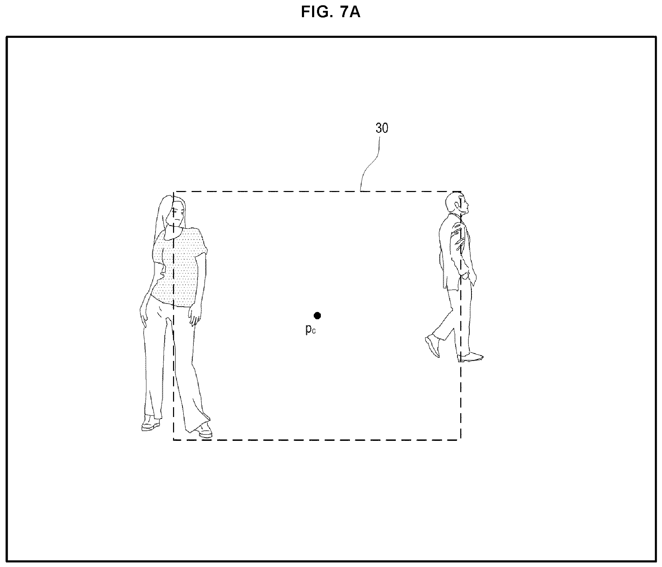

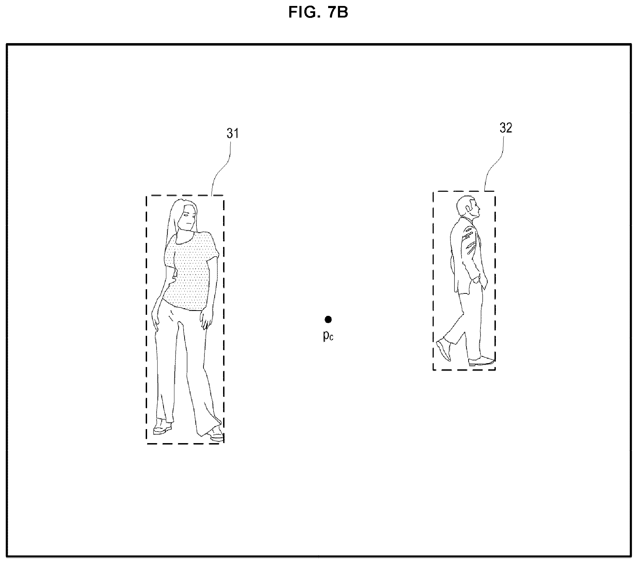

FIGS. 7A and 7B are diagrams illustrating a method of setting an AF window used when a controller 150 determines a location of a lens 11 having maximum sharpness from contrast data. FIG. 6 is used in a process of selecting the object as the basis for calculating the distance D by the distance calculator 160, while FIGS. 7A and 7B are used in a process of searching for the optimal focus location on the basis of the contrast data subsequently performed by the controller 150 and are thus distinguished from FIG. 6.

Generally, in order to prevent excessive computation, an optimal focus search is performed in an AF window set in the image rather than the entire image. That is, the controller 150 computes the contrast data in order to search for the optimal focus location in the AF window. Accuracy of the search for the optimal focus location may change depending on how such an AF window is set. For example, when the AF window is simply set at the center $p_c$ of the image as illustrated in FIG. 7A, two objects may be included in the AF window, and when edge data are more in an object of a distant location than in an object of a close location, the optimal focus location may be misjudged.

As described above, the object identifier 130 identifies the objects by the deep learning-based thing detection algorithm and already knows size information of the objects, and thus, regions 31 and 32 occupied by respective objects may be set as the AF window or a region 31 of one of the respective objects may be set as the AF window. Such object-based AF window setting helps increase accuracy and rapidness of the autofocus.

Meanwhile, even though the controller 150 determines the focus location based on the distance D calculated by the distance calculator 160 as described above, the controller 150 sets a focus range including the focus location with a predetermined margin and searches for the optimal focus location in the focus range. However, there is a trade-off in that the larger the size of the focus range, that is, the size of the margin, the higher the accuracy but the slower the autofocus speed, and the smaller the size of the focus range, the faster the autofocus speed but the lower the accuracy.

Accordingly, in an embodiment of the present disclosure, the accuracy of the object, that is, the object probability, obtained from the object identifier 130 is used to determine the size of the margin. It is preferable that as the accuracy becomes higher, the focus range is set to be narrower (the margin is set to be smaller), and as the accuracy becomes lower, the focus range is set to be wider (the margin is set to be larger). Such a variable margin changes depending on the object probability according to the deep learning-based thing detection algorithm, and may thus be appropriately adjusted according to situations of the objects in the image.

Meanwhile, embodiments of setting the autofocus in a currently captured image have been described so far. However, in a situation where the object in the image moves at a predetermined speed or more, it is difficult to achieve response performance corresponding to a moving speed of the object even though the autofocusing is quickly performed. Accordingly, in consideration of this, an embodiment of the present disclosure proposes a method of setting an AF window at a predicted location to be moved according to a moving speed of a moving object.

First, the controller 150 sets an AF window in the captured image and searches for the optimal focus location in the set AF window. When it is identified by the object identifier 130 that movement of the identified object is a predetermined threshold value or more, the controller 150 sets the AF window in consideration of the movement of the object.

In an embodiment, the controller 150 changes and sets a size of the AF window when the movement of the object is movement of the object that becomes close to or far from the image sensor 110 (close or far movement). When the object moves to become close to the image sensor 110, the size of the AF window may be significantly changed in advance, and when the object moves to become far from the image sensor 110, the size of the AF window may be significantly changed in advance.

In addition, in another embodiment, when the movement of the object is movement of the object to another location in the captured image (two-dimensional movement), the controller 150 may move and set the AF window in advance to a predicted location according to the movement. When the movement of the object is a composite of close or far movement and two-dimensional movement, the controller 150 may change a size and a location of the AF window in consideration of both the close or far movement and the two-dimensional movement.

FIG. 8A is a block diagram of an artificial intelligence (AI) device in accordance with an exemplary embodiment of the present disclosure, and FIG. 8B is an example of a deep neural network (DNN) model to which the present disclosure may be applied.

An AI device 20 may include a communication device including an AI module capable of performing AI processing, a server including the AI module, or the like. In addition, the AI device 20 may be included as at least a part in a communication device and may be provided to perform at least some of AI processing together. The AI device 20 may include an AI processor 21, a memory 25 and/or a communication unit 27.

The AI device 20 is a computing device capable of learning a neural network, and may be implemented as various electronic devices such as a server, a desktop PC, a notebook PC, and a tablet PC.

The AI processor 21 may learn a neural network by using a program stored in the memory 25. In particular, the AI processor 21 may learn a neural network for recognizing object-related data. Here, the neural network for recognizing object-related data may be designed to simulate a human brain structure on a computer, and may include a plurality of network nodes with weights that simulate neurons of the human neural network. The plurality of network modes may exchange data according to their respective connection relationships such that neurons may simulate the synaptic activity of neurons for sending and receiving signals through synapses. Here, the neural network may include a deep learning model developed from a neural network model. In the deep learning model, a plurality of network nodes may be located in different layers and exchange data according to a convolutional connection relationship. Examples of neural network models include various deep learning techniques, such as deep neural networks (DNN), convolutional deep neural networks (CNN), recurrent neural networks (RNN), restricted Boltzmann machine (RBM), deep belief networks (DBN), or Deep Q-Networks, and may be applied to fields such as computer vision, speech recognition, natural language processing, and speech/-signal processing.

Meanwhile, the processor that performs the functions as described above may be a general-purpose processor (e.g., CPU), but may be an AI dedicated processor (e.g., GPU) for artificial intelligence learning. The memory 25 may store various programs and data required for the operation of the AI device 20. The memory 25 may be implemented by a non-volatile memory, a volatile memory, a flash memory, a hard disk drive (HDD), a solid state drive (SDD), or the like. The memory 25 is accessed by the AI processor 21, and data read/-write/edit/delete/update by the AI processor 21 may be performed. In addition, the memory 25 may store a neural network model (e.g., a deep learning model 26) generated through a learning algorithm for data classification/-recognition in accordance with an exemplary embodiment of the present disclosure.

Meanwhile, the AI processor 21 may include a data learning unit 22 for learning a neural network for data classification/recognition. The data learning unit 22 may learn a criterion on which training data to use and how to classify and recognize data using the training data in order to determine data classification/recognition. The data learning unit 22 may learn the deep learning model by acquiring training data to be used for learning and applying the acquired training data to the deep learning model.

The data learning unit 22 may be manufactured in the form of at least one hardware chip and mounted on the AI device 20. For example, the data learning unit 22 may be manufactured in the form of a dedicated hardware chip for artificial intelligence (AI), or may be manufactured as a part of a general-purpose processor (CPU) or a dedicated graphics processor (GPU) and mounted on the AI device 20. In addition, the data learning unit 22 may be implemented as a software module. When implemented as a software module (or a program module including an instruction), the software module may be stored in a non-transitory computer-readable medium. In this case, at least one software module may be provided by an operating system (OS) or an application.

The data learning unit 22 may include a training data acquisition unit 23 and a model learning unit 24.

The training data acquisition unit 23 may acquire training data requested for the neural network model for classifying and recognizing data. For example, the training data acquisition unit 23 may acquire object data and/or sample data for input into the neural network model as training data.

The model learning unit 24 may learn to have a criterion for determining how the neural network model classifies predetermined data by using the acquired training data. In this case, the model learning unit 24 may train the neural network model through supervised learning using at least a portion of the training data as a criterion for determination. Alternatively, the model learning unit 24 may train the neural network model through unsupervised learning to discover a criterion by self-learning using the training data without being supervised. In addition, the model learning unit 24 may train the neural network model through reinforcement learning by using feedback on whether the result of situation determination based on the learning is correct. In addition, the model learning unit 24 may train the neural network model by using a learning algorithm including an error back-propagation method or a gradient decent method.

When the neural network model is trained, the model learning unit 24 may store the learned neural network model in the memory. The model learning unit 24 may store the learned neural network model in a memory of a server connected to the AI device 20 via a wired or wireless network.

The data learning unit 22 may further include a training data preprocessor (not illustrated) and a training data selection unit (not illustrated) in order to improve the analysis result of the recognition model or to save resources or time required for generating the recognition model.

The training data preprocessor may preprocess the acquired data such that the acquired data may be used for learning to determine the situation. For example, the training data preprocessor may process the acquired data into a preset format such that the model learning unit 24 may use the training data acquired for learning for image recognition.

In addition, the training data selection unit may select data required for training from the training data acquired by the training data acquisition unit 23 or the training data preprocessed by the preprocessor. The selected training data may be provided to the model learning unit 24. For example, the training data selection unit may select only data on an object included in a specific region as the training data by detecting the specific region among images acquired through a camera device.

In addition, the data learning unit 22 may further include a model evaluation unit (not illustrated) to improve the analysis result of the neural network model.

The model evaluation unit may input evaluation data to the neural network model, and may cause the model learning unit 24 to retrain the neural network model when an analysis result output from the evaluation data does not satisfy a predetermined criterion. In this case, the evaluation data may be predefined data for evaluating the recognition model. For example, the model evaluation unit may evaluate the model as not satisfying a predetermined criterion when, among the analysis results of the trained recognition model for the evaluation data, the number or ratio of evaluation data for which the analysis result is inaccurate exceeds a preset threshold. The communication unit 27 may transmit the AI processing result by the AI processor 21 to an external communication device.

Referring to FIG. 8B, the deep neural network (DNN) is an artificial neural network (ANN) including several hidden layers between an input layer and an output layer. The deep neural network may model complex non-linear relationships, as in typical artificial neural networks.

For example, in a deep neural network structure for an object identification model, each object may be represented as a hierarchical configuration of basic image elements. In this case, the additional layers may aggregate the characteristics of the gradually gathered lower layers. This feature of deep neural networks allows more complex data to be modeled with fewer units (nodes) than similarly performed artificial neural networks.

As the number of hidden layers increases, the artificial neural network is called 'deep', and machine learning paradigm that uses such a sufficiently deepened artificial neural network as a learning model is called deep learning. Furthermore, the sufficiently deep artificial neural network used for the deep learning is commonly referred to as the deep neural network (DNN).

In the present disclosure, data required to train an object data generation model may be input to the input layer of the DNN, and meaningful evaluation data that may be used by a user may be generated through the output layer while the data pass through the hidden layers. In this way, the accuracy of the evaluation data trained through the neural network model can be represented by a probability, and the higher the probability, the higher the accuracy of the evaluated result.

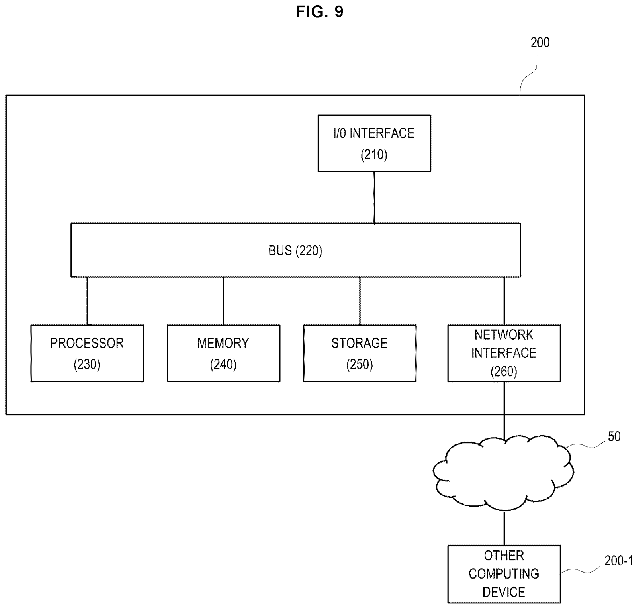

FIG. 9 is a block diagram illustrating the hardware configuration of a computing device 200 that implements a camera device 100.

Referring to FIG. 9, a computing device 200 includes a bus 220, a processor 230, a memory 240, a storage 250, an input/output interface 210, and a network interface 260. The bus 220 is a path for the transmission of data between the processor 230, the memory 240, the storage 250, the input/output interface 210, and the network interface 260. However, it is not particularly limited how the processor 230, the memory 240, the storage 250, the input/output interface 210, and the network interface 260 are connected. The processor 230 is an arithmetic processing unit such as a central processing unit (CPU) or a graphics processing unit (GPU). The memory 240 is a memory such as a random-access memory (RAM) or a read-only memory (ROM). The storage 250 is a storage device such as a hard disk, a solid state drive (SSD), or a memory card. The storage 250 may also be a memory such as a RAM or a ROM.

The input/output interface 210 is an interface for connecting the computing device 200 and an input/output device. For example, a keyboard or a mouse is connected to the input/output interface 210.

The network interface 260 is an interface for communicatively connecting the computing device 200 and an external device to exchange transport packets with each other. The network interface 260 may be a network interface for connection to a wired line or for connection to a wireless line. For example, the computing device 200 may be connected to another computing device 200-1 via a network 50.

The storage 250 stores program modules that implement the functions of the computing device 200. The processor 230 implements the functions of the computing device 200 by executing the program modules. Here, the processor 230 may read the program modules into the memory 240 and may then execute the program modules.

The hardware configuration of the computing device 200 is not particularly limited to the construction illustrated in FIG. 9. For example, the program modules may be stored in the memory 240. In this example, the computing device 200 may not include the storage 250.

The camera device 100 may at least include the processor 230 and the memory 240, which stores instructions that can be executed by the processor 230. The camera device 100 of FIG. 2, in particular, can be driven by executing instructions including a variety of functional blocks or steps included in the camera device 100, via the processor 230.

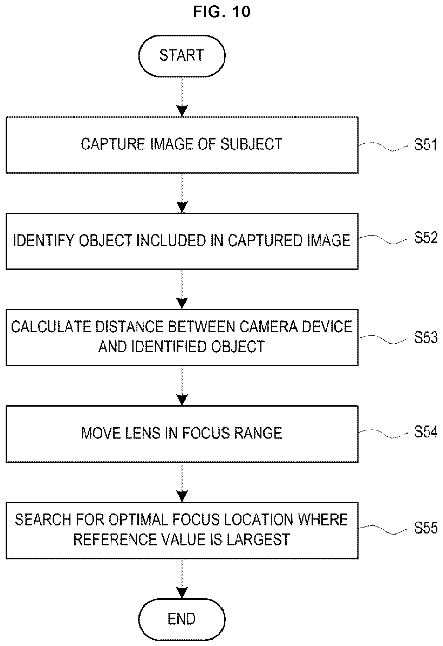

FIG. 10 is a schematic flowchart illustrating an autofocus adjustment method in the camera device 100 according to an embodiment of the present disclosure.

First, the image sensor 110 captures an image of the subject (S51).

Next, the object identifier 130 identifies an object included in the captured image using the deep learning-based thing detection algorithm (S52).

The distance calculator 160 calculates a distance between the camera device and the identified object based on an occupancy percentage of the identified object in the captured image (S53).

The controller 150 moves the lens in a focus range including at least a focus location of the lens corresponding to the calculated distance (S54).

Finally, the controller 150 searches for an optimal focus location at which a reference value is the largest while the lens is moving (S55).

In S53, more specifically, the distance calculator 160 acquires an angle of view in the vertical direction included in specification information of the camera device, and calculates the distance between the camera device and the identified object using the acquired angle of view in the vertical direction, a ratio of a size of the object, and a physical size of the object. In this case, the ratio of the size of the object may be a ratio of a size of the entirety or a part of the object in the vertical direction to a size of the captured image in the vertical direction.

Here, the object may be an object selected among a plurality of objects included in the captured image, and the selected object may be an object closest to the center of the captured image among the plurality of objects.

Alternatively, the object may be an object selected among a plurality of objects included in the captured image, the plurality of objects may include different types of two or more objects, and the selected object may be an object whose size of the entirety or a part is standardized among the two or more objects.

Alternatively, the identification of the object may be performed by the deep learning-based thing detection algorithm, accuracy for the identification of the object may be obtained as a result of the identification, and an object having higher accuracy among the plurality of objects included in the captured image may be selected as the identified object.

Many modifications and other embodiments of the invention will come to the mind of one skilled in the art having the benefit of the teachings presented in the foregoing descriptions and the associated drawings. Therefore, it is understood that the invention is not to be limited to the specific embodiments disclosed, and that modifications and embodiments are intended to be included within the scope of the appended claims.

**Claims**

1. A camera device comprising a processor and a memory storing instructions executable by the processor, comprising:

   an image sensor capturing an image of a subject;
   an object identifier identifying an object included in the captured image;
   a distance calculator calculating a distance between the camera device and the identified object based on an occupancy percentage of the identified object in the captured image; and
   a controller searching for an optimal focus location where a reference value is the largest while moving a lens in a focus range including at least a focus location of the lens corresponding to the calculated distance.

2. The camera device of claim 1, wherein the reference value is contrast data or edge data.

3. The camera device of claim 1, further comprising a storage for storing specification information of the camera device,

   wherein the distance calculator acquires an angle of view in a vertical direction included in the specification information, and calculates the distance between the camera device and the identified object using the acquired angle of view in the vertical direction, a ratio of a size of the object, and a physical size of the object, and the ratio of the size of the object is a ratio of a size of the entirety or a part of the object in the vertical direction to a size of the captured image in the vertical direction.

4. The camera device of claim 3, wherein the object is a person, and the part of the object is a face.

5. The camera device of claim 3, wherein the object is a vehicle, and the part of the object is a license plate of the vehicle.

6. The camera device of claim 3, wherein the controller reads locus data included in the specification information stored in the storage and determines the focus range from the calculated distance with reference to the locus data, and the locus data is expressed as a focus location according to a distance to the subject at a specific zoom magnification.

7. The camera device of claim 1, wherein the object is an object selected among a plurality of objects included in the captured image.

8. The camera device of claim 7, wherein the selected object is an object closest to a center of the captured image among the plurality of objects.

9. The camera device of claim 7, wherein the plurality of objects include different types of two or more objects, and
the selected object is an object whose size of the entirety or a part is standardized among the two or more objects.

10. The camera device of claim 7, wherein the identification of the object is performed by a deep learning-based thing detection algorithm, and accuracy for the identification of the object is obtained as a result of the identification, and
the selected object is an object having higher accuracy among the plurality of objects.

11. The camera device of claim 7, wherein the controller sets a window in the captured image and searches for the optimal focus location in the set window, and the set window is set around the selected object.

12. The camera device of claim 1, wherein the identification of the object is performed by a deep learning-based thing detection algorithm, and accuracy for the identification of the object is obtained as a result of the identification, and
as the accuracy becomes higher, the focus range is set to be narrower, and as the accuracy becomes lower, the focus range is set to be wider.

13. The camera device of claim 1, wherein the controller sets a window in the captured image and searches for the optimal focus location in the set window, and when there is movement of the identified object, the controller sets the window in consideration of the movement of the object.

14. The camera device of claim 13, wherein the controller changes a size of the window when the movement of the object is movement of the object that becomes close to or far from the image sensor.

15. The camera device of claim 13, wherein the controller moves and set the window to a predicted location according to the movement when the movement of the object is movement of the object to another location in the captured image.

16. An autofocus adjustment method performed by instructions under the control of a processor in a camera device comprising the processor and a memory storing the instructions executable by the processor, the autofocus adjustment method comprising:

capturing an image of a subject;
identifying an object included in the captured image;
calculating a distance between the camera device and the identified object based on an occupancy percentage of the identified object in the captured image; and
moving a lens in a focus range including at least a focus location of the lens corresponding to the calculated distance; and
searching for an optimal focus location where a reference value is the largest while moving the lens.

17. The autofocus adjustment method of claim 16, further comprising:

acquiring an angle of view in a vertical direction included in specification information of the camera device; and
calculating the distance between the camera device and the identified object using the acquired angle of view in the vertical direction, a ratio of a size of the object, and a physical size of the object,
wherein the ratio of the size of the object is a ratio of a size of the entirety or a part of the object in the vertical direction to a size of the captured image in the vertical direction.

18. The autofocus adjustment method of claim 16, wherein the object is an object selected among a plurality of objects included in the captured image, and the selected object is an object closest to a center of the captured image among the plurality of objects.

19. The autofocus adjustment method of claim 16, wherein the object is an object selected among a plurality of objects included in the captured image, the plurality of objects include different types of two or more objects, and the selected object is an object whose size of the entirety or a part is standardized among the two or more objects.

20. The autofocus adjustment method of claim 16, wherein the identification of the object is performed by a deep learning-based thing detection algorithm, and accuracy for the identification of the object is obtained as a result of the identification, and
an object having higher accuracy among a plurality of objects included in the captured image is selected as the identified object.

# FIG. 1

# FIG. 2

FIG. 3A

FIG. 3B

## FIG. 3C

## FIG. 4

FIG. 5

FIG. 6

FIG. 7A

FIG. 7B

## FIG. 8A

20

27

21

25

COMMUNICATION UNIT

AI PROCESSOR

MEMORY

DEEP LEARNING MODEL — 26

DATA LEARNING UNIT

22

LEARNING DATA
ACQUISITION UNIT

23

MODEL LEARNING UNIT

24

## FIG. 8B

INPUT LAYER          HIDDEN LAYER 1          HIDDEN LAYER 2          OUTPUT LAYER

**FIG. 9**

## FIG. 10

START

↓

CAPTURE IMAGE OF SUBJECT — S51

↓

IDENTIFY OBJECT INCLUDED IN CAPTURED IMAGE — S52

↓

CALCULATE DISTANCE BETWEEN CAMERA DEVICE AND IDENTIFIED OBJECT — S53

↓

MOVE LENS IN FOCUS RANGE — S54

↓

SEARCH FOR OPTIMAL FOCUS LOCATION WHERE REFERENCE VALUE IS LARGEST — S55

↓

END

## INTERNATIONAL SEARCH REPORT

| International application No. |
|---|
| **PCT/KR2022/007016** |

### A.    CLASSIFICATION OF SUBJECT MATTER

**H04N 23/60**(2023.01)i; **H04N 23/00**(2023.01)i; **H04N 5/77**(2006.01)i; **G03B 13/20**(2006.01)i; **G03B 13/32**(2006.01)i; **G03B 3/00**(2006.01)i; **G06V 20/60**(2022.01)i; **G06V 10/82**(2022.01)i

According to International Patent Classification (IPC) or to both national classification and IPC

### B.    FIELDS SEARCHED

Minimum documentation searched (classification system followed by classification symbols)

H04N 23/60(2023.01); G06T 7/20(2006.01); H04N 5/225(2006.01); H04N 5/232(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 오토-포커스(auto-focus), 객체 식별(object identification), 거리(distance), 추적 (tracking), 로커스(Locus), 윈도우(window)

### C.    DOCUMENTS CONSIDERED TO BE RELEVANT

| Category* | Citation of document, with indication, where appropriate, of the relevant passages | Relevant to claim No. |
|---|---|---|
| Y | KR 10-2014-0148448 A (QUALCOMM INCORPORATED) 31 December 2014 (2014-12-31) See paragraphs [0004], [0055] and [0082]; and claim 11. | 1-20 |
| Y | KR 10-2014-0013407 A (SAMSUNG TECHWIN CO., LTD.) 05 February 2014 (2014-02-05) See paragraphs [0040]-[0059]; and figures 3 and 5. | 1-20 |
| Y | US 2016-0094791 A1 (HANWHA TECHWIN CO., LTD.) 31 March 2016 (2016-03-31) See paragraph [0101]. | 6 |
| Y | KR 10-2017-0040963 A (SAMSUNG ELECTRONICS CO., LTD.) 14 April 2017 (2017-04-14) See paragraphs [0136]-[0137]. | 10-15,20 |
| A | KR 10-2010-0068717 A (SAMSUNG ELECTRONICS CO., LTD.) 24 June 2010 (2010-06-24) See paragraphs [0013]-[0040]; and figures 1-6. | 1-20 |

☐ Further documents are listed in the continuation of Box C.        ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **18 January 2023** | **20 January 2023** |

| Name and mailing address of the ISA/KR | Authorized officer |
|---|---|
| **Korean Intellectual Property Office** **Government Complex-Daejeon Building 4, 189 Cheongsa- ro, Seo-gu, Daejeon 35208** | |
| Facsimile No. **+82-42-481-8578** | Telephone No. |

Form PCT/ISA/210 (second sheet) (July 2019)

## INTERNATIONAL SEARCH REPORT
### Information on patent family members

International application No.

**PCT/KR2022/007016**

| Patent document cited in search report | | | Publication date (day/month/year) | Patent family member(s) | | | Publication date (day/month/year) |
|---|---|---|---|---|---|---|---|
| KR | 10-2014-0148448 | A | 31 December 2014 | CN | 104205801 | A | 10 December 2014 |
| | | | | CN | 104205801 | B | 26 June 2018 |
| | | | | EP | 2832089 | A1 | 04 February 2015 |
| | | | | US | 2013-0258167 | A1 | 03 October 2013 |
| | | | | WO | 2013-148591 | A1 | 03 October 2013 |
| KR | 10-2014-0013407 | A | 05 February 2014 | CN | 103578116 | A | 12 February 2014 |
| | | | | CN | 103578116 | B | 13 February 2018 |
| | | | | KR | 10-1758684 | B1 | 14 July 2017 |
| | | | | US | 2014-0022394 | A1 | 23 January 2014 |
| | | | | US | 9373034 | B2 | 21 June 2016 |
| US | 2016-0094791 | A1 | 31 March 2016 | CN | 105472235 | A | 06 April 2016 |
| | | | | CN | 105472235 | B | 27 March 2020 |
| | | | | KR | 10-1932546 | B1 | 27 December 2018 |
| | | | | KR | 10-2016-0038644 | A | 07 April 2016 |
| | | | | US | 9503651 | B2 | 22 November 2016 |
| KR | 10-2017-0040963 | A | 14 April 2017 | CN | 108141536 | A | 08 June 2018 |
| | | | | EP | 3360318 | A1 | 15 August 2018 |
| | | | | EP | 3360318 | A4 | 15 August 2018 |
| | | | | KR | 10-2407624 | B1 | 10 June 2022 |
| | | | | US | 10182196 | B2 | 15 January 2019 |
| | | | | US | 2017-0099444 | A1 | 06 April 2017 |
| | | | | WO | 2017-061720 | A1 | 13 April 2017 |
| KR | 10-2010-0068717 | A | 24 June 2010 | None | | | |

Form PCT/ISA/210 (patent family annex) (July 2019)